# EUROPEAN PATENT APPLICATION

(11) **EP 1 731 026 A1**
(43) Date of publication of application: **13.12.2006**
(21) Application number: 06114345.9
(22) Date of filing: 22.05.2006
(51) Int. Cl.: A01J 5/12, A01J 5/14

(54) **Electronic pulsator for milking plants**

(30) Priority: 10.06.2005 IT MI20051084
(71) Applicant: INTERPULS S.P.A., 42020 Albinea RE (IT)
(72) Inventor: Nicolini, Gabriele, 42042, FABBRICO (RE) (IT); Sicuri, Roberto, 43100, PARMA (IT)
(74) Representative: Giambrocono, Alfonso

(57) **Abstract**

The electronic pulsator (100) comprises a body (101) and means for connecting the pulsation channel (206) alternately to a first conduit (182) connected to a source of negative pressure and to a second conduit (144) connected to atmosphere. These means comprise: housed in a first seat (196) provided in the body (101), a first elastic diaphragm valve (212) arranged to close and open a first aperture (201) connecting the first conduit (182) to the pulsation channel (206); housed in a second seat (221) provided in the body (101), a second valve (220) arranged to close and open a second aperture (222) connecting the second conduit (144) to the pulsation channel (206); and a solenoid valve (111) and relative conduits (186, 192, 266) connecting the first seat (196) to the first conduit (182) or to atmosphere. The second valve (220) is connected to the first diaphragm valve (212) such that it follows its movement. When in its rest condition, the first diaphragm valve (212) closes the first aperture (204) whereas the second valve (220) is open. The pulsator can also be of double type (100).

## Description

The present invention relates to a pulsator for milking plants, i.e. a device which enables a channel, called the pulsation channel and communicating with a milking unit on the plant, to be connected alternately to atmosphere or to a source of negative pressure (commonly known in the art as a vacuum source).

As known to the expert of the art, the pulsator is that plant component which plays a fundamental role in the milking operation, from the most simple using a milking pail, to the most sophisticated using a robot. Two separate pulsator versions are available commercially, namely pneumatic pulsators and electronic pulsators. Both these types perform the same function, differing mainly by their operating precision, reliability and performance. Electronic pulsators represent the most evolved version and provide higher performance.

Italian patent 1268592, of the same proprietor as the present application, describes an electronic pulsator for milking plants. The present Figures 1 and 2 are essentially those accompanying the text of said patent, and will serve to explain the differences between the pulsator shown therein and the pulsator of the present invention. It should be noted that in these figures those regions within the pulsator in which air at atmospheric pressure is present are shown dotted, whereas those in which a determined degree of vacuum has been created have been left in white.

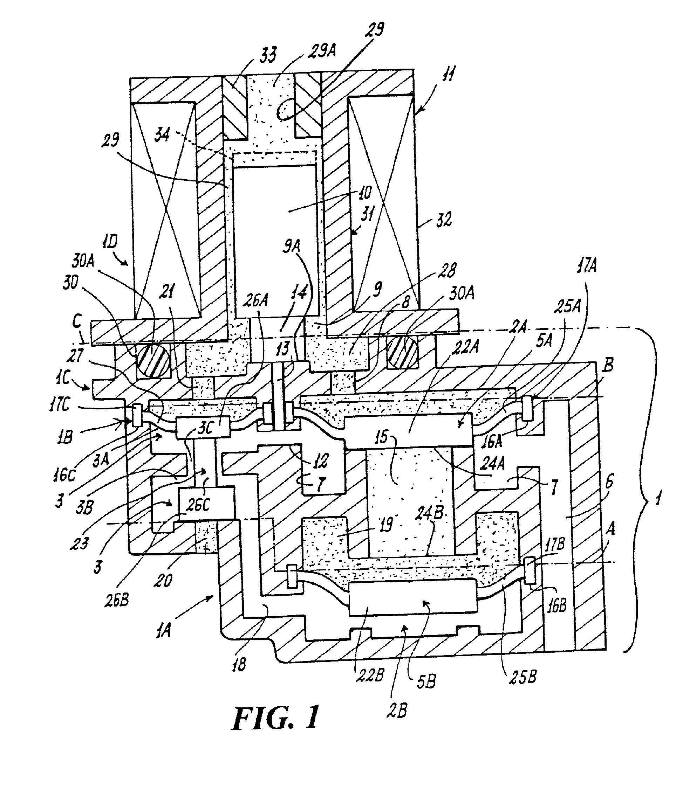

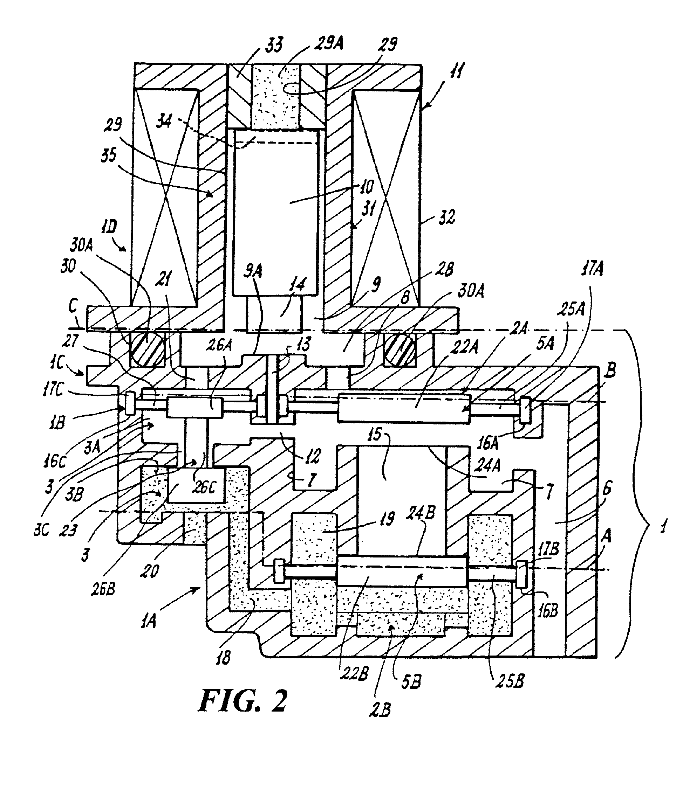

The pulsator 1 of Figures 1 and 2 enables air at atmospheric pressure and at negative pressure (to create a determined degree of vacuum) to be fed alternately into a pulsation channel 15, for this purpose it comprising means for connecting a pulsation channel 15 (which itself communicates, in a manner not shown, via a pulsation nozzle, with a milking unit, also not shown) alternately to a first conduit 7 communicating with a vacuum source (not shown) and with a second conduit 19 connected (in a manner not shown) to atmosphere. The said means comprise a first (5A) and a second (5B) diaphragm valve each housed in its own seat 2A and 2B, the valving element 22A and 22B of which is movable in a vertical direction, by the action of the ambient air pressure, between a rest position of the diaphragm 25A and 25B (Figure 2) and a position in which the diaphragm 25A and 25B is elastically deformed (Figure 1), in order to respectively close and open a first aperture 24A connecting the first conduit 7 to the pulsation channel 15 and a second aperture 24B connecting the second conduit 19 to the pulsation channel 15. The two seats 2A and 2B are connected, via a plurality of further conduits 12, 13, 8, 21, 9, 18, 20, 3 and valve means 23 and 11, to the vacuum source or to atmosphere, such that only the first aperture 24A or the second aperture 24B is open. The two diaphragm valves 5A and 5B sealedly divide the respective seat 2A and 2B into two parts, of which one constantly communicates with the first conduit 7 and with the second conduit 19 respectively, while the other part is connected, via said valve means 23, 11 and said further conduits 12, 8, 21, 9, 18, 20, 3, to atmosphere or to the vacuum source respectively.

Said valve means comprise: a solenoid valve 11 the movable core 10 of which is arranged to alternately intercept a conduit 13 connected to the vacuum source or an aperture 29A communicating with atmosphere; and a pilot valve 23, also of diaphragm type, comprising a diaphragm 27 deformable elastically by the ambient air pressure when this is present on one of its sides, a central shutoff part 26A of the pilot valve 23 being rigidly connected to a second shutoff part 26B respectively of a conduit 3C connected to the vacuum source or of a conduit 20 connected to atmosphere. The respective seats 9, 3 in which the solenoid valve 11 and the pilot valve 23 are housed presents conduits 21, 8, 18 which connect them together and to the seats 2A and 2B of the diaphragm valves 5A and 5B respectively.

It should also be noted that the pulsator body 1 is essentially formed from three parts, indicated in Figures 1 and 2 by 1A, 1B and 1C. For further description and in particular for the meaning of the reference numerals which appear in Figures 1 and 2 and which have not been cited, reference should be made directly to the text of 1268592.
The aforedescribed pulsator is of the type with only one pulsation channel (15). However, as stated in the description of the aforesaid patent, using the same principle a pulsator provided with two separate pulsation channels can be formed, i.e. a so-called double pulsator. This latter can be easily obtained by combining into a single device the pulsator of Figures 1 and 2 and an identical but symmetrically disposed pulsator, with the two respective connection channels to the pulsation channel opening lowerly into a single nozzle with which the double pulsator is provide. A double pulsator of this type is described for example in Italian utility model 250236, the proprietor of which is the same as of the present application. In the commercial version of the aforedescribed double pulsator there is also an upper cover which covers the two solenoid valves and also the pulsator electronic control card.

The pulsator of Figures 1 and 2 presents a serious problem due to the state of the first diaphragm valve 5A when the pulsator is in its rest condition (corresponding to the situation of Figure 2). In this respect, this valve does not close the relative first aperture 24A. Consequently from the start of the milking plant until a vacuum level is reached able to deform the elastic diaphragm 25A of the first valve 5A in order to move the valving element 22A against the aperture 24A, atmospheric air enters the vacuum pipe of the plant on which the pulsator is installed, the entering air flow increasing as the vacuum level increases. In the case of milking plants in which the number of installed pulsators is high and in which the vacuum pump has only modest power, it can even happen that the set vacuum level may not be reached, as the rate at which the air enters through the pulsators is higher than the rate at which the air is evacuated by the vacuum pump.

Another drawback is due to the fact that this pulsator is provided with a pilot valve 23, which represents that part most subjected to wear, with consequent frequent maintenance problems.

An object of the present invention is to provide an electronic pulsator which does not present the aforesaid drawbacks of the initially described electronic pulsator.

This object is attained by the electronic pulsator of the present invention, comprising a body and means for connecting a pulsation channel, provided within the body, alternately to a first conduit connected to a source of negative pressure and to a second conduit connected to atmosphere, said means comprising: housed in a first seat provided in the body, a first elastic diaphragm valve arranged to close and open a first aperture connecting the first conduit to the pulsation channel; housed in a second seat provided in the body, a second valve arranged to close and open a second aperture connecting the second conduit to the pulsation channel; and a solenoid valve and relative conduits connecting the first seat to the first conduit or to atmosphere;
characterised in that:
the second valve is connected to the first diaphragm valve such that it follows its movement;
when in its rest condition, the first diaphragm valve closes the first aperture whereas the second valve is open.

The fact that in the pulsator of the present invention the first valve, when in its rest condition, closes the first aperture means that on starting the plant there is no communication between the pulsation channel and the vacuum source, hence obviating the drawback, present in the known pulsator, of air entering the vacuum pipe during start-up of the milking plant. Moreover, in the pulsator of the invention the pilot valve is not provided, this decidedly simplifying the pulsator structure and enabling the maintenance frequency to be considerably lengthened.

A further drawback of the known pulsator is that because of sediments which may form within the pulsator body (even if they are removed by the wash water during the wash operation performed periodically under normal maintenance) these sediments may block the small diameter passages, and in particular the horizontal channel 12 (Figures 1 and 2), with consequent blockage of the pulsator. It has also been found that wash water may settle in the bottom of the known pulsator, with the danger of ice formation in its interior during the coldest periods of the year, which can block the pulsator.

Another drawback is that when the parts 1A, 1B and 1C (Figures 1 and 2) of the pulsator body 1 have been injection moulded from a suitable plastic material, the intermediate part 1 B requires additional machining (in particular to form the horizontal conduit 112, which is not obtainable directly by moulding), this influencing the pulsator cost.

Again, because of the manner in which the pulsator is constructed, its various component parts must be constructed with very narrow working tolerances, this also negatively influencing production costs.
In the marketed embodiment corresponding to the scheme of Figures 1 and 2, the three parts 1A, 1 B, 1C forming the body 1 are made of nylon 6.6 filled with glass fibre. After being formed by injection moulding followed by machining, these pieces before being able to be used must be cured for at least 3-4 months to enable a natural process of moisture absorption from the atmosphere to take place, this being essential (even though seal gaskets are provided between the parts 1A, 1 B, 1C, these gaskets not being shown in Figures 1 and 2) to give these parts sufficient dimensional stability (essential requirement to achieve the seal between the various component parts of the pulsator body, and hence its proper operation).

Another object of the invention is therefore to provide a pulsator which does not present even the aforelisted drawbacks, this being attained in the manner explained in the following description of an embodiment of the pulsator of the invention, this description being made with reference to the accompanying drawings, in which:
Figure 3 is a vertical section through a double pulsator according to the present invention;
Figure 4 is a vertical section therethrough on the line 4-4 of Figure 3;
Figure 5 is an isometric view of the pulsator cover alone;
Figure 6 is a plan view thereof from below;
Figure 7 is an isometric view of the upper part of the pulsator body;
Figure 8 is a plan view thereof from above;
Figure 9 is an isometric view of the upper intermediate part of the pulsator body;
Figure 10 is an isometric view of the lower intermediate part of the pulsator body;
Figure 11 is an isometric view of the lower part of the pulsator body;
Figure 12 is a plan view of the seal gasket disposed between the upper part and the upper intermediate part;
Figure 13 is an isometric view of the seal gasket interposed between the upper intermediate part and the lower intermediate part, which forms one piece with the elastic diaphragm and the valving elements of the two diaphragm valves of the double pulsator;
Figure 14 is a perspective view of the seal gasket interposed between the lower intermediate part and the lower part of the pulsator body;
Figure 15 is a front view of a diaphragm insertable into the ambient air suction nozzle provided in the cover, enabling the intake air flow to be varied;
Figure 16 is a side view thereof in the direction of the arrow 16 of Figure 15;
Figure 17 is a cross-section therethrough on the line 17-17 of Figure 15;
Figure 18 is a front view of a cable clamping means used in the pulsator, shown in its situation prior to use;
Figure 19 is a side view thereof in the direction of the arrow 19 of Figure 18;
Figure 20 is a side view thereof in the direction of the arrow 20 of Figure 18;
Figure 21 is an isometric view of a variant of the lower intermediate part of the pulsator body, which can replace that shown in Figure 10;
Figure 22 is a front elevation of the pulsator in the version relation to Figure 21;
Figure 23 is an elevation thereof in the direction of the arrow 23 of Figure 22.

As can be seen from the figures, the electronic pulsator 100 comprises a body (indicated overall by 101) composed of a lower part 101A, a lower intermediate part 101Bi, an upper intermediate part 101Bs and an upper part 101C, between which suitable seal gaskets are interposed, described hereinafter. In the specific illustrated case said parts are made of a suitable plastic material (specified hereinafter).

On the upper part 101C a part 101D is provided comprising essentially the two solenoid valves 111.

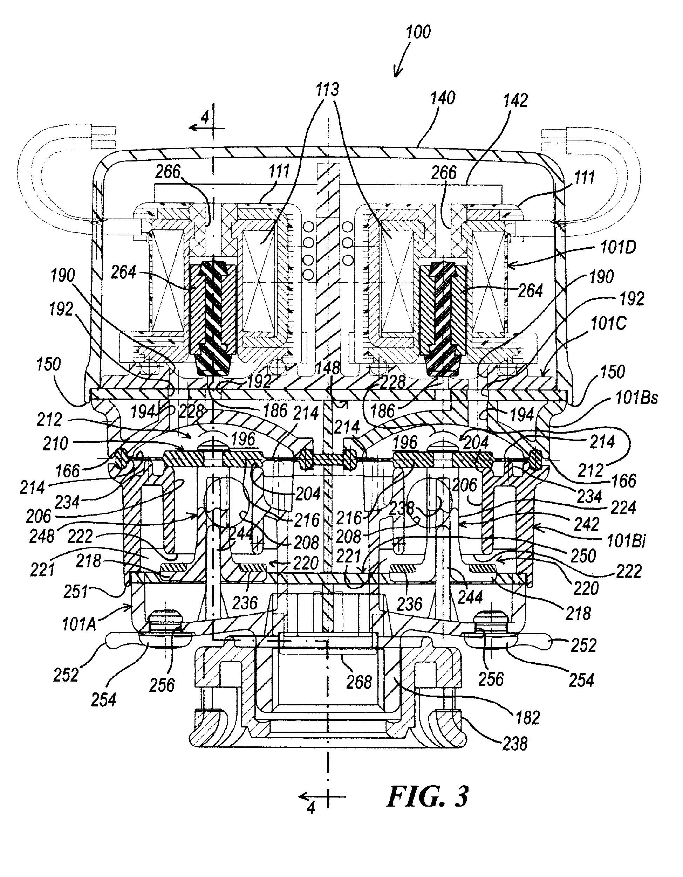

As already stated, the electronic pulsator 100 is double in the sense that it is in fact composed of two pulsators disposed symmetrically about a central plane of Figure 3, to form a single device.

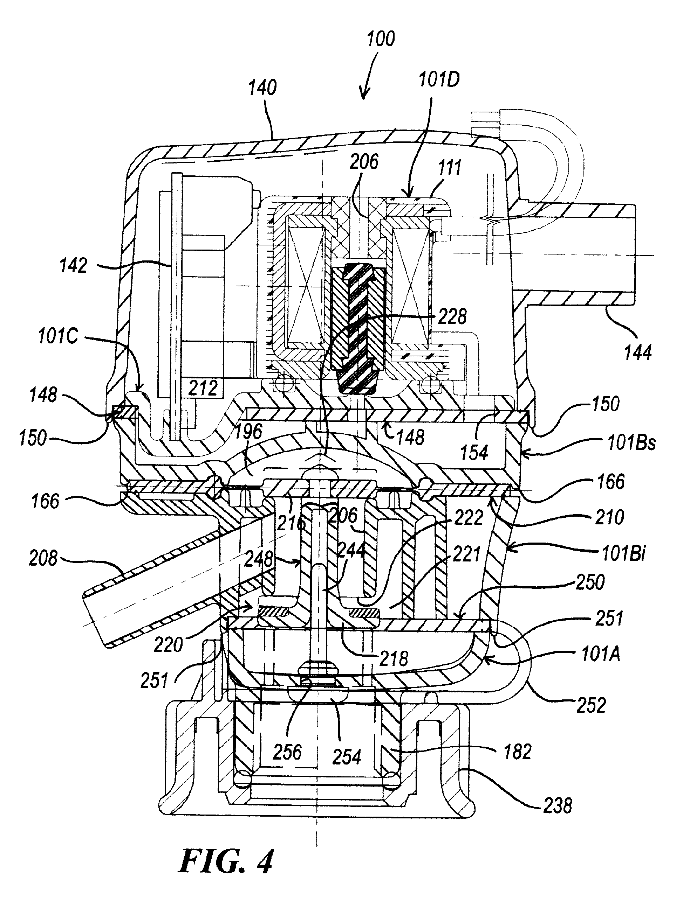

The part 101 D comprising the solenoid valves 111 is protected by a cover 140 (Figures 3, 4, 5 and 6) which also encloses a conventional electronic control card 142 (Figure 4) and relative electrical connections to the two solenoid valves 111, none of which requires further explanation seeing that the solenoid valves used are the same as those used in the electronic pulsator of the scheme of Figures 1 and 2 currently produced by the proprietor of the present patent application, and also the same electronic card. The cover 140 presents an entry nozzle 144 (Figures 4, 5 and 6) for the clean atmospheric air originating from a suitable pipe (not shown), or directly from the environment via a filtering means (for example of the type described in Italian patent application M1990000657, of the same proprietor as the present patent application).

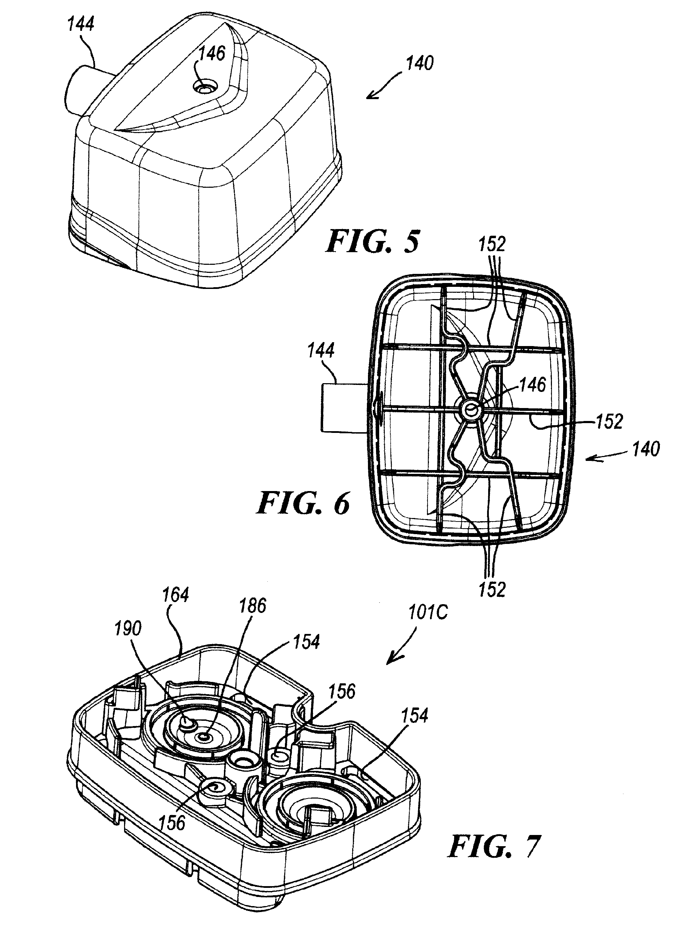

Consequently air at atmospheric pressure is present in the cover 140. The lower edge of this latter rests on the periphery of the upper intermediate part 101Bs via a seal gasket 148 (Figures 3, 4 and 11). As can be seen from Figures 3 and 4, the cover 140 presents a downwardly extending peripheral rim 150 (Figures 3 and 4) laterally covering the upper gasket 148, to act as a barrier against any high pressure water jets. The cover 140 is fixed to the upper part 101C of the body 101 of the pulsator 100 by only one screw (not shown) insertable through the hole 146 (Figures 5 and 6) provided in the central region of the cover 140. To prevent excessive deformation being generated by said screw on fixing the cover (and possibly compromising the seal), intersecting stiffening ribs 152 are provided inside the cover 140 (Figure 6), some of which also rest directly on the solenoid valves 111.

The function of the upper part 101C of the body 101 is to house both the solenoid valves 111 and the electronic control card 142. It should be noted that the solenoid valves 111 are applicable to the upper part 101C by a bayonet connection, this facilitating their inspection and maintenance. In this respect, in the known pulsator currently marketed by the proprietor of the present patent application the solenoid valves are each fixed by two screws.

The upper part 101C presents two suitably dimensioned ports 154 (Figures 4, 7 and 8) enabling air to enter the cover 140 through the nozzle 144, to reach (as explained hereinafter) as far as the lower part 101A of the body 101 of the pulsator 100.

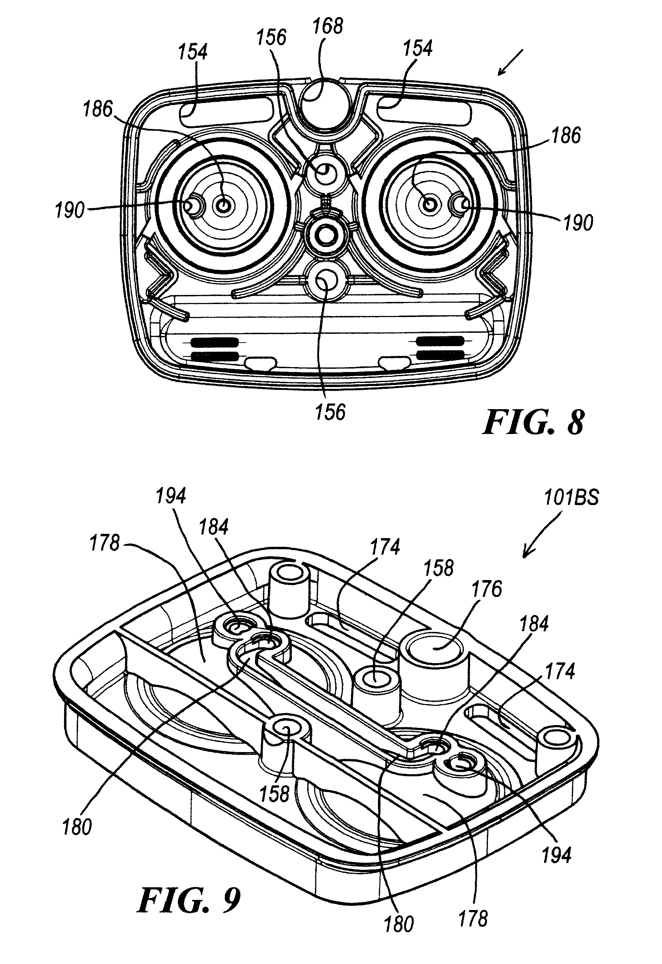

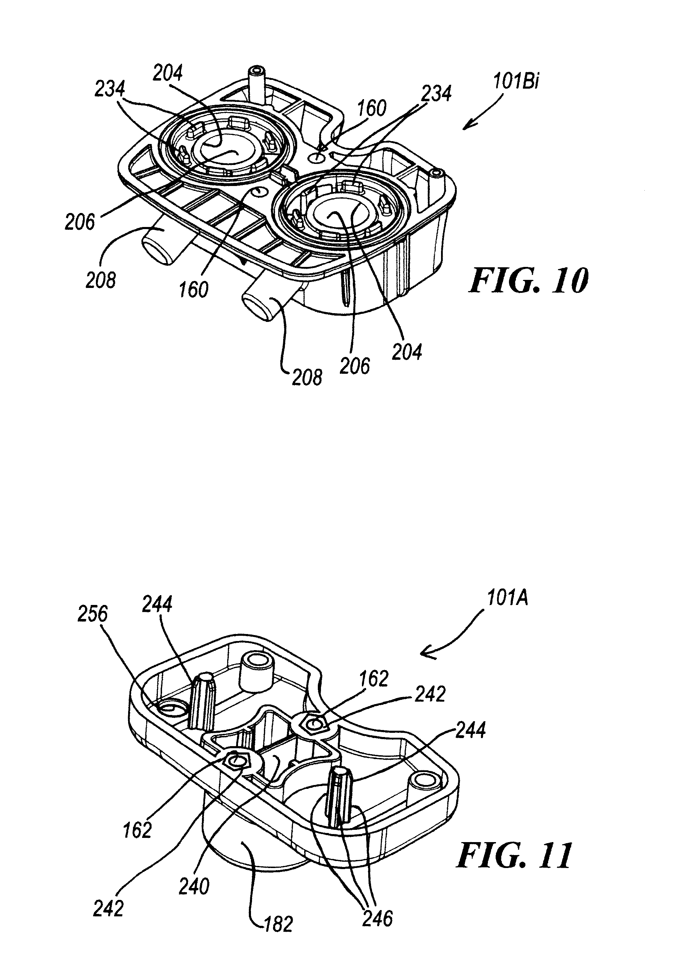

It should be noted that the upper part 101C is fixed to the underlying parts (101Bs, 101Bi and 101A) by only two screws (not shown) insertable through respective holes 156 provided in 101C (Figures 7 and 8), 158 in 101Bs (Figure 9) and 160 in 101Bi (Figure 10), these screws being received in relative female threads 162 provided in corresponding metal inserts embedded in 101A (Figure 11). The fact that these screws are only two in number and positioned within the central region means that, although enabling the pulsator dimensions to be contained, it can happen that as the screws are tightened, one or more of the aforesaid parts flexes, so compromising the seal between the various parts (notwithstanding the presence of the seal gaskets), with consequent loss of vacuum (air entry) through the more distant peripheral regions.

This problem is overcome by making the parts of the pulsator body 101 of high strength and high rigidity material. If using a plastic material, in addition to possessing the aforesaid characteristics, it should conveniently be chosen such as to possess high stability with time and against temperature variations and moisture. A plastic material suitable for this purpose is for example Technyl. A further contribution to the rigidity of the upper part 101C of the body 101 is given in this specific case by the presence of a continuous perimetral rib 164 (Figure 7) of significant height. If this arrangement is insufficient, it is also possible to make the upper part 101C with a curvature opposing any deformation produced by its fixing by said two screws. In this manner, initial contact with the upper intermediate part 101 Bs (via the gasket 148) takes place peripherally, then when said two screws have been tightened the consequent deformation ensures a vacuum seal. The upper part 101C (as do the parts 101 Bs and 101Bi) presents a downwardly extending rim 166 (Figures 3 and 4) to further ensure a lasting seal between the parts 101C and 101 Bs.

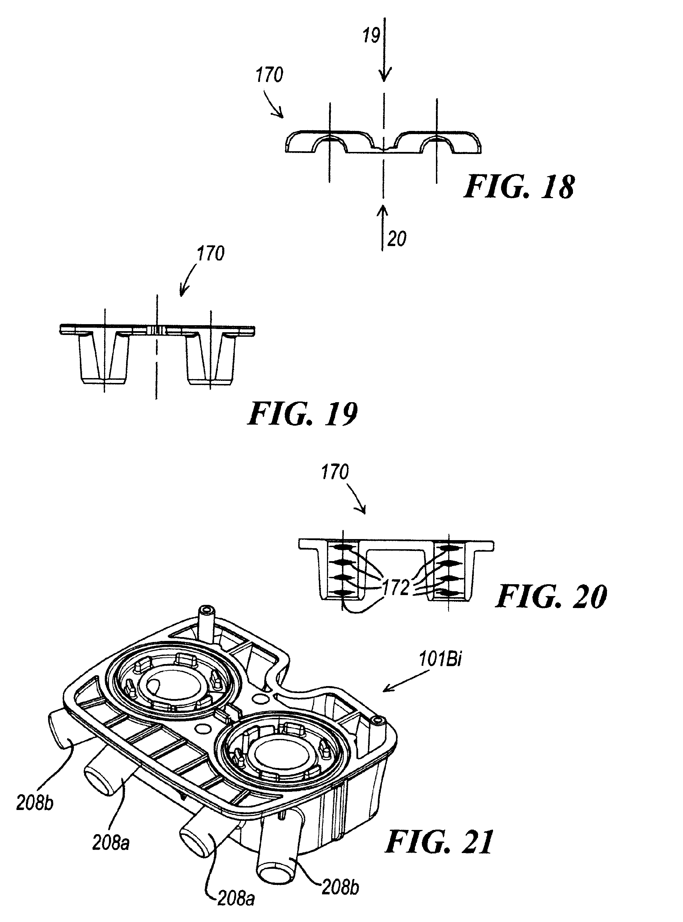

As can be seen from Figure 8, the upper part 101C also presents a frusto-conical seat 168 for housing a frusto-conical cable clamp 170, shown in Figures 18-20 in its open condition before use. Obviously, when used, the cable clamp 170 is bent back on itself to be applied to the end of a relative electric powering cable (not shown) and then easily inserted into the frusto-conical seat 168 of the upper part 101C. The teeth 172 (Figure 20) of the cable clamp 170 prevent the cable from withdrawing therefrom. It should be noted that if the cable is pulled, the cable clamp 170 when in use becomes increasingly wedged into the matching seat 168, hence securely retaining the cable. Even if the supply cable may have different diameters, the cable clamp in question can equally accommodate them in its interior, provided it mates with the frusto-conical seat 168.

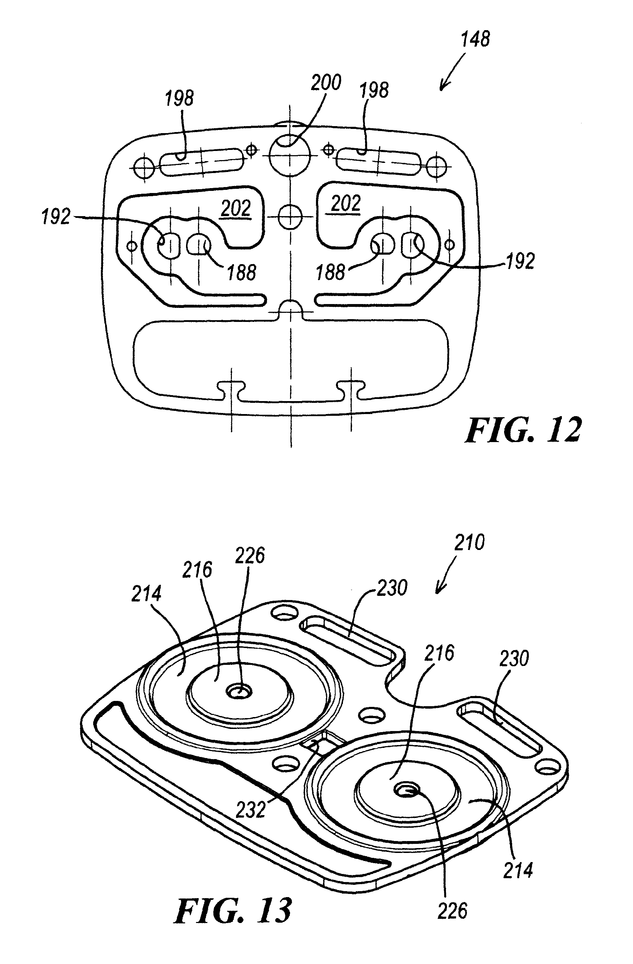

The upper intermediate part 101Bs, separately shown in Figure 9, presents two slots 174 enabling the air entering from the nozzle 144 to continue its path towards the lower part 101C of the body 101, in addition to the said two through holes 158 for said screws and a hole 176 through which said supply cable passes. The part 101Bs also comprises two domed regions 178 upperly defining the relative pulsation chambers which form the seat of respective diaphragm valves described hereinafter. The part 101Bs also comprises two channels 180 extending in opposite directions from a central aperture (not visible in the drawings) which communicates, via other connections and a vacuum nozzle 182, with the vacuum pipe of the milking plant. The far end 184 of each of the two channels 180 communicates with a through hole 186 (Figures 7 and 8) provided in the upper part 101C. The first seal gasket 148 (Figure 12) interposed between this latter and the upper intermediate part 101Bs presents a through hole 188 corresponding with said hole 186. Likewise, the first gasket 148 presents a through hole 192 corresponding with each of two through holes 194 (Figures 3 and 9) provided in the upper part 101C and through holes 190 (Figures 3, 7, 8) in the upper part 101C, to form a conduit 190, 192, 194 which extends from the solenoid valves 111 to the relative pulsation chambers 196. The first gasket 148 also presents air passage slots 198, and a through hole 200 for the supply cable. Two regions 202 of the diaphragm 148 are of lesser thickness, given that vacuum is not present below them during operation.

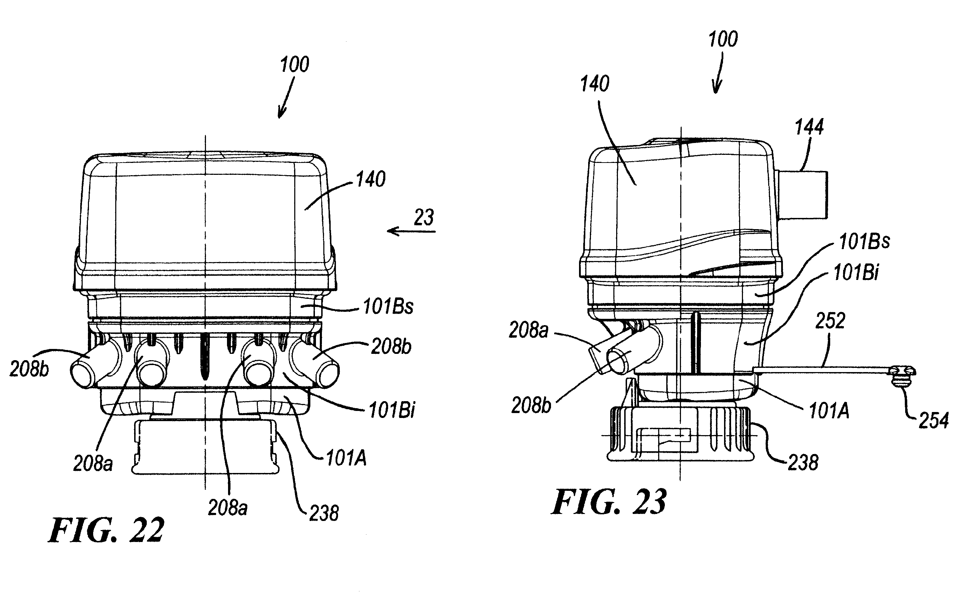

The lower intermediate part 101Bi (Figures 3, 4 and 10) presents, at the pulsation chamber 196 (Figure 3) of the upper intermediate part 101Bs, respective circular apertures 204 upperly defining a relative pulsation channel 206 (Figures 3, 4 and 10) communicating with a corresponding pulsation nozzle 208 connectable by a suitable flexible pipe to the milking unit. It should be noted that although in Figures 3, 4 and 10 only one pulsation nozzle (208) is shown, two pulsation nozzles can be connected to each pulsation channel 206 (so-called four-way arrangement), as shown in Figures 21, 22 and 23.

Between the upper intermediate part 101Bs and the lower intermediate part 101Bi a seal gasket is interposed forming one piece (indicated by 210 in Figure 13) with two elastic diaphragms 214 of circular ring shape, and relative elastic circular valving elements 216 forming part of the first diaphragm valve, each of these latter being indicated overall by 212. Each elastic diaphragm 214, which forms the thinnest part of the element 210, controls (in a manner already clear to an expert of the art, but explained hereinafter) both the elastic valving element 216 (forming the greatest thickness part of the element 210 and enabling the first aperture 204 to be closed), and a rigid circular valving element 218 of a relative second valve, indicated overall by 220. The rigid valving element 218 closes a second aperture 222 (Figures 3 and 4) which lowerly defines the pulsation channel 206. As seen from Figures 3 and 4, the elastic valving element 216 of the first valve 212 is connected to the rigid valving element 218 of the second valve 220 by a hollow stem 224, the upper end of which can be forcibly inserted through a hole 226 provided in the centre of the valving element 216, by virtue of the shape of said upper end. Consequently, when the elastic valving element 216 of the first valve 212 closes the first aperture 204 (Figure 10), the rigid valving element 218 of the second valve 220 does not close the second aperture 222, and vice versa. As can be seen from Figures 3 and 4, the rigid valving element 218 and the stem 224 form one piece or "piston" 248.

It is important to note that before commencing milking, with the pulsator 100 still at rest the elastic diaphragms 214 are undeformed and the elastic diaphragm 216 of the first valve 212 closes the first aperture 204 of the pulsation channel 206, because the rigid valving element 218 of the second valve 220 does not close the second aperture 222 so that there is no vacuum in the pulsation channel 206. Vacuum is present in the annular ring 235 and the elastic valving element 216 remains pressed against the first aperture 204, to hence close the first valve 212 from commencement, so preventing loss of vacuum which, as stated, occurs in the known pulsator of Figures 1 and 2.

It should also be noted that because of the doming, the two pulsation chambers 196 are of minimum volume, in order to limit vacuum consumption to a minimum and hence increase efficiency. For simplicity, in Figures 3 and 4 the line 228 indicates the position of the upper end of the stem 224 when the first valve 212 is open. This shows that the movement of the stem 224 and hence of the elastic valving element 216 and rigid valving element 218 are truly minimal, this enabling the volume of the pulsation chambers 196 to be reduced to minimum values.

As can be seen from Figure 13, air passage slots 230 and a substantially square central through hole 232 for vacuum passage are provided in the element 210 (Figure 13). It should also be noted that when in their rest position, the elastic diaphragms 214 rest on a series of arched vertical ribs 234 (Figure 13), the purpose of which is to limit their downward deformation, which can happen in time because vacuum is always present below diaphragms 214, within the annular ring 235. It should also be noted that the rigid valving element 218 of the second valve 220 carries on its upper face a peripheral gasket 236 which, when the valving element 218 closes the second aperture 222, provides a seal.

The lower part 101A (Figures 3, 4 and 11) of the body 101 of the pulsator 100 comprises a threaded nozzle 182 to be connected in usual manner (for example to the vacuum pipe of the milking plant by means of a connector 238). Towards its interior the nozzle 182 is divided into two parts by a baffle 240. In the lower part 101A two metal inserts 242 are also embedded, containing said threaded holes 162 for the assembly screws for the body 101, and also two vertical guide pegs 244 for the pistons 248. As can be seen from Figure 11, the guide pegs 244 present three angularly equidistant lateral ribs 246 to limit sliding contact with the inner wall of the cavity 238 in the pistons 248 to only along three lines, to reduce friction and wear, and also to enable any impurities to collect on the bottom, so preventing them from hindering free sliding of the pistons 248.

In addition to providing a seal between the parts 101A and 101Bi, the lower gasket 250, disposed between the lower intermediate part 101 Bi and the lower part 101A, comprises in this specific case two flexible appendixes 252 terminating in a thickened part forming a relative plug 254, the two plugs 254 intended to close relative through holes 256 (Figures 3, 4 and 11) provided at the lowest points of the base of the lower part 101A. During normal operation of the pulsator 100, the plugs 254 are inserted into the relative holes 256 to prevent entry of dirt from the outside, whereas they have to be removed each time the pulsator is washed internally, to drain residual water present therein, which can settle within the pulsator 100, so preventing possible ice formation during the coldest periods of the year, with possible pulsator blockage.

The seal gaskets 148, 210 and 250 are preferably of a thermoplastic material of suitable hardness, such as Megol. The interior of the vacuum nozzle 182 can house removable means (indicated by 268) to constrict its opening, for example of the type described in Italian utility model 250236 of the same proprietor as the present application, and to which reference should be made. By using this means, vacuum feed to the pulsator 100 can be limited, hence varying the duration of the stages A and B of the milking cycle, in accordance with specified requirements. Said means also prevent the two halves into which the vacuum nozzle 182 is divided by the baffle 240 (Figure 11) from mutually interfering and generating damaging disturbances to the output signal, detectable by the graphics of the pulsation cycle.

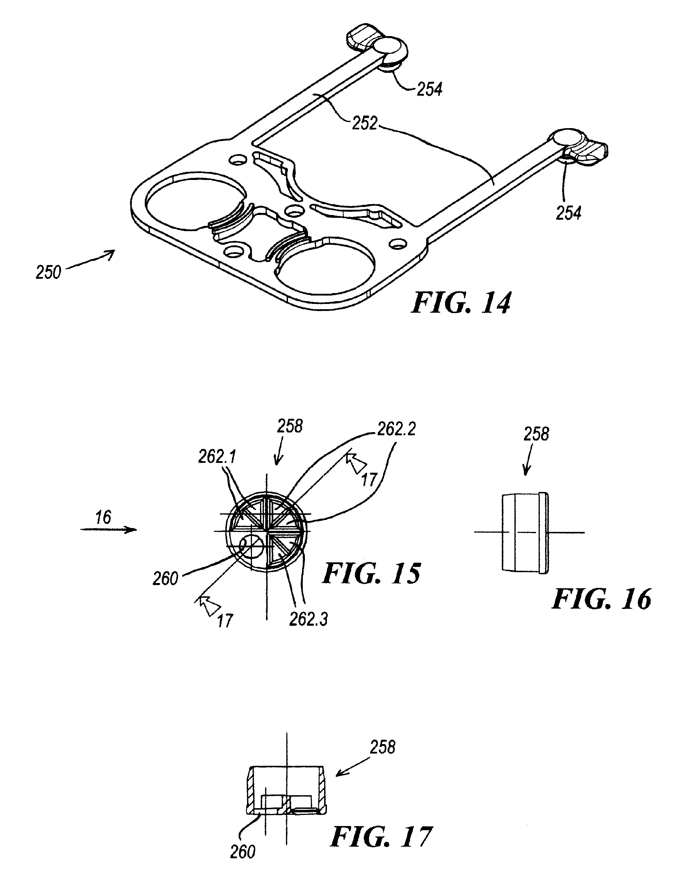

The pulsator 100 can be provided with an insert 258 (Figures 15-17), insertable by pressing from the outside into the nozzle 144 through which the atmospheric air enters the cover 140, to enable the air flow rate into the pulsator 100 to be adjusted. The insert 258 is substantially cylindrical and presents a minimum passage port 260, in this specific case circular, enabling the pulsator 100 to operate without causing injury to the animal. In this specific case, three breakable circular sector regions 262.1, 262.2 and 262.3 are provided, enabling the entering air flow to be progressively increased, this enabling stages C and D of the pulsation cycle to be adjusted when required.

The essential operation of the pulsator 100 will now be described, although already evident to the expert of the art from the aforegoing. As stated, on starting the milking plant, the first two diaphragm valves 212 are in the situation shown in Figures 3 and 4, i.e. they close the first aperture 204. The two solenoid valves 111 are also in the condition of Figures 3 and 4, in which the relative solenoids 113 are not energized, so that the respective movable cores 264 close the through hole 186 (see also Figures 7 and 8) which lowerly communicate with the vacuum source to which the vacuum nozzle 182 is connected. The upper through hole 266 of the solenoid valve 111 remains open, so that the atmospheric air present in the cover 140 can seep laterally to the movable cores 264 and, via the through holes 190, 192 and 194, reach the pulsation chambers 196, above the flexible valving elements 216. Simultaneously, the atmospheric air present in the cover 140 , by passing through the slots 154 (Figures 7 and 8), 174 (Figure 9), 198 (Figure 12) and 230 (Figure 13), reaches the lower part 101A of the body 101, below the rigid valving element 218 of the second valve 220, this valving element being in the condition shown in Figures 3 and 4, so that the second aperture 220 of the pulsation channel 206 is open, hence the atmospheric air can pass to the milking unit via the pulsation nozzles 208 (also see Figure 10).

When the solenoid valves 111 are energized under the command of the electronic card 142, the movable cores 246 are attracted upwards to close the aperture 266 and hence interrupt the connection to the interior of the cover 140 and hence to the atmospheric air. The upward movement of the movable cores 264 hence opens the through hole 186 (also see Figures 7 and 9) which communicate with the vacuum nozzle 182, so that vacuum is created below the movable cores 264 (which are in their raised position) and, via the through holes 190, 192 and 194, also in the pulsation chambers 196, above the elastic valving elements 216. From the aforesaid, as atmospheric air is present below each elastic valving element 216 (i.e. within the pulsation channel 206), even if vacuum is present below the elastic diaphragm 214, the elastic valving element 216 is obliged to move upwards (by the amount indicated by the profile 228), dragging with it and elastically deforming the membrane 214 and consequently opening the first aperture 204 of the pulsation channel 206. Another consequence is that the rigid valving element 218 closes the second aperture 222 of the pulsation channel 206. As the pulsation channel 206 now communicates with vacuum nozzle 182 via the first aperture 204, the required degree of vacuum is communicated to the milking unit via the pulsation nozzles 208.

When the solenoids 113 are de-energized under the command of the electronic card 142, the movable cores 264 return to the position of Figures 3 and 4 by gravity, closing the through holes 186 and consequently interrupting communication between the vacuum source and the through holes 190, 192 and 194, while at the same time restoring communication with the atmospheric air via the conduits 266, so that atmospheric air returns to the pulsation chambers 196. As vacuum is present below the elastic diaphragms 214 and below the elastic valving elements 216, these latter are pulled downwards, to close the first aperture 204 of the pulsation channel 206. Consequently, communication between the pulsation channel 206 and the vacuum nozzle 182 is interrupted. At the same time the rigid valving elements 218 are forced to descend, to hence restore communication between the pulsation channel 206 and the atmospheric air present below them, so that air is fed to the milking unit through the pulsation nozzles 208.

As will be apparent from the aforegoing, the operating principle and structure of the aforedescribed pulsator are extremely simple. This results in numerous advantages, especially the fact that it does not comprise complex critical components (such as the pilot valve 23 of the pulsator of Figures 1 and 2), so that its production and assembly are simpler and decidedly cheaper than known pulsators. Particular note should be taken that the component parts of the body 101 of the pulsator 100 do not require additional machining after their formation by injection moulding. Moreover less maintenance is required and the pulsator is easily inspectionable by the user, in addition to being more reliable. In particular, whereas to remove the two solenoid valves 11 of the currently available known pulsator corresponding to the scheme of Figures 1 and 2 four screws have to be unscrewed (with the danger of dismantling the pulsator body), in the pulsator 100, in which the solenoid valves 111 are fixed by a bayonet connection, they can be removed for inspecting the movable cores 264 extremely simply by hand without causing dismantling of the body 101, which remains assembled by the said two screws.

It should also be noted that the pulsator 100 enables all the inner channels to be overdimensioned, both for atmospheric air and for vacuum, which in the case of the illustrated embodiment are the largest of this category, resulting in much better performance than that of other commercially available electronic pulsators. Moreover, because of the manner in which it is constructed, the pulsator 100 does not require the narrow manufacturing tolerances of the pulsator of Figures 1 and 2.

Again, by using the said inserts 258 and diaphragms 268, the stages A, B, C and D of the milking cycle can be controlled in terms of the time profile, to adapt the milking operation to specific requirements.

In the described and illustrated pulsator 100, the internal passages grazed by the wash water have been formed with dimensions and a configuration which facilitate cleaning and removal of any impurities, so preventing blockage of the pulsator by these latter. The provision of drain holes 256, which eliminate settling of the wash water, prevents blockage of the pulsator by the formation of internal ice during the coldest periods. The provision of raised edges on the periphery of the parts 101 Bi, 101 Bs and 101C of the body 101 of the pulsator 100 to bound the relative seal gaskets ensures a long-duration seal. These raised edges also provide protection for said seal gaskets, so that external jets do not directly strike the relative interfaces, to the advantage of sealing stability.

It should be noted that by suitably modifying the type of supply to the pulsator 100 such as to energize the two solenoids 113 simultaneously, it itself performs the valve function which is of fundamental importance in milking plants with automatic detachment of the milking unit, as the two pulsator channels simultaneously control both the flowmeter of the milking plant enabling vacuum feed to the milking unit to be interrupted, and the automatic detachment device to physically detach the milking unit from the milked animal.

For certain particular applications a double pulsator is useful in which with both solenoids 113 energized, vacuum is present in one pulsation channel 208 and atmospheric air is present in the other. The pulsator 100 can be set to satisfy this requirement, this not being possible with the known pulsator of Figures 1 and 2.

Finally, if the pulsator body 101 is made of a plastic material of high strength, rigidity and stability with time, and which does not require curing (for example the already stated Technyl), vacuum losses are avoided and a pulsator is obtained having a considerably longer operating life than known electronic pulsators.

## Claims

1. Electronic pulsator (100) for milking plants, comprising a body (101) and means for connecting a pulsation channel (206), provided within the body (101), alternately to a first conduit (182) connected to a source of negative pressure and to a second conduit (144) connected to atmosphere, said means comprising: housed in a first seat (196) provided in the body (101), a first elastic diaphragm valve (212) arranged to close and open a first aperture (201) connecting the first conduit (182) to the pulsation channel (206); housed in a second seat (221) provided in the body (101), a second valve (220) arranged to close and open a second aperture (222) connecting the second conduit (144) to the pulsation channel (206); and a solenoid valve (111) and relative conduits (186, 192, 266) connecting the first seat (196) to the first conduit (182) or to atmosphere;
**characterised in that**:
the second valve (220) is connected to the first diaphragm valve (212) such that it follows its movement;
when in its rest condition, the first diaphragm valve (212) closes the first aperture (204) whereas the second valve (220) is open.

2. Double electronic pulsator (100), **characterised by** comprising two symmetrically disposed electronic pulsators claimed in claim 1, the body of the two pulsators forming one piece (101).

3. Electronic pulsator as claimed in claim 1, wherein the solenoid valve (111) is fixed to the pulsator body (101) by a bayonet connection.

4. Electronic pulsator (100) as claimed in claim 1 or 2, comprising a cover (140) disposed on the pulsator body (101) to protect the solenoid valve or the two solenoid valves (111) and the electronic control card (142), the cover (140) presenting a nozzle (144) for atmospheric air entry.

5. Electronic pulsator (100) as claimed in claim 4, wherein the cover (140) is fixed to the body (101) of the pulsator (100) by a single central screw, stiffening ribs (152) being provided inside the cover (140).

6. Electronic pulsator (100) as claimed in claim 4, wherein a seal gasket (148) is provided between the cover (140) and the body (101).

7. Electronic pulsator (100) as claimed in claim 4, wherein the cover presents a downwardly extending rim (150) which protects the seal gasket (148).

8. Electronic pulsator (100) as claimed in claim 1 or 2, wherein the body (101) of the pulsator (100) comprises a lower part (101A) in which the vacuum nozzle (182) is provided, a lower intermediate part (101Bi) in which the pulsator channel (206) is provided together with the first aperture (204) and the second aperture (222), an upper intermediate part (101Bs) in which the first valve seat (196) is provided, and an upper part (101C) which contains the solenoid valve or the two solenoid valves (111).

9. Electronic pulsator (100) as claimed in claim 8, wherein the parts (101A, 101Bi, 101Bs, 101C) forming the pulsator body (101) are held together by only two screws, seal gaskets (252, 210, 148) being provided between the parts (101A, 101Bi, 101Bs, 101C).

10. Electronic pulsator (100) as claimed in claims 6 and 9, wherein the gasket (148) between the upper part (101C) and the upper intermediate part (101 Bs) also acts as the seal gasket for the cover.

11. Electronic pulsator (100) as claimed in claim 9, wherein the upper intermediate part (101Bs) and the lower intermediate part (101Bi) lowerly present a downwardly extending rim (166, 251) to laterally cover the relative gaskets (210, 252).

12. Electronic pulsator (100) as claimed in claim 9, wherein the parts (101A, 101Bi, 101Bs, 101C) and the cover (140) are of a plastic material of high strength and rigidity, and having high stability with time and against temperature variations and moisture.

13. Electronic pulsator (100) as claimed in claim 12, wherein the plastic material is Technyl.

14. Electronic pulsator (100) as claimed in claim 1, wherein the first seat (196) and second seat (221) are aligned, the rigid valving element (218) of the second valve (220) being connected to the central part of the elastic valving element (216) of the first valve (212) by a vertical stem (224) forming one piece (248) with the rigid valving element (218).

15. Electronic pulsator (100) as claimed in claim 14, wherein the stem (224) of the piece (248) is hollow, into its cavity (238) there being insertable a guide peg (244) extending vertically from the lower part (101A) of the body (101).

16. Electronic pulsator (100) as claimed in claim 15, wherein the guide peg (244) presents at least three angularly equidistant lateral ribs (246) to limit its sliding contact with the cavity (238) of the stem (224).

17. Electronic pulsator (100) as claimed in claims 1 and 9, wherein the elastic valving element (216) of the first diaphragm valve (212), the elastic diaphragm (214) and the seal gasket between the upper intermediate part (101Bs) and the lower intermediate part (101Bi) form a single element (210).

18. Electronic pulsator (100) as claimed in claims 9 and 17, wherein the seal gaskets (148, 210, 250) are of a thermoplastic plastic material.

19. Electronic pulsator (100) as claimed in claim 18, wherein the plastic material is Megol.

20. Electronic pulsator (100) as claimed in claim 1 or 2, wherein the pulsator body (101) lowerly presents one or more wash water drainage apertures (256) closable by plugs (254).

21. A double electronic pulsator (100) as claimed in claims 2 and 20, wherein the plugs (254) are connected by flexible strips (252) to the seal gasket (250) disposed between the lower part (101A) and the lower intermediate part (101 Bi), such as to form one piece.

22. Electronic pulsator (100) as claimed in claim 1, wherein the first seat (196) for the first valve (212) is shaped upperly as a dome to minimize its volume.

23. Electronic pulsator (100) as claimed in claim 1 or 2, wherein two pulsation nozzles (208a, 208b) are connected to one pulsation channel (206).

24. Electronic pulsator (100) as claimed in claim 1 or 2, wherein for insertion into the atmospheric air entry nozzle (144) present on the cover (140) there is provided an insert (258) in which a minimum passage port (260) is provided to enable the pulsator (100) to operate without causing injury to the animal to be milked, the insert (258) also comprising breakable regions, to increase inlet air flow if required.

25. Electronic pulsator (100) as claimed in claim 1 or 2, wherein removable means (268) are provided in the vacuum nozzle (182) to constrict its opening in order to limit vacuum feed to the pulsator (100).

26. Electronic pulsator (100) as claimed in claim 1 or 2, wherein a frusto-conical seat (168) is provided in the body (101) to house a cable clamp (170) which is also frusto-conical so that it (170) becomes wedged into the frusto-conical seat when the cable (168) is pulled.
